# EUROPEAN PATENT APPLICATION

(11) **EP 2 042 454 A1**
(43) Date of publication of application: **01.04.2009**
(21) Application number: 07425600.9
(22) Date of filing: 28.09.2007
(51) Int. Cl.: B65G 49/06

(54) **Sheet processing apparatus**

(71) Applicant: Officine Meccaniche Vismara di Mauro Vismara, 20050 Macherio (MI) (IT)
(72) Inventor: Vismara, Mauro, 20035 Lissone (Milano) (IT)
(74) Representative: Lunati, Vittoriano

(57) **Abstract**

This is an apparatus (1) for processing sheets (2) comprising: transport means (3) for transferring at least one sheet (2) defining a working path (3a), and supporting the sheets (2) mainly due tot he effect of gravity and mainly along one edge (2a), at least one processing device (8) located along the working path (3a) and suitable for processing at least one edge (2a) of at least one sheet (2), at least one tipping device (9) located along the working path (3a) and suitable for changing the edge (2b) being processed, wherein the transport means (3) are capable of transferring at least one sheet (2) in a continuous sequence of movements from the processing device (8) to the tipping device (9) and vice versa.

## Description

The present invention relates to an apparatus for processing sheets, and sheets of glass in particular, of the type described in the preamble of claim 1.

Several different types of known apparatus are currently used to process glass sheet, that are particularly designed to grind the edges and corners of the sheets with the aid of suitable grinding wheels or other such tools.

In particular, there are known so-called "grinding lines" consisting of a plurality of grinding wheels arranged along a path defined by a conveyor line.

The operation of the grinding lines involves the sheet being transferred along the conveyor line and the generally preferred systems hold the sheets in a substantially vertical position so that one edge of said sheets is supported due to the effect of gravity on the conveyor line and said edge comes into contact with the grinding wheels and is thus suitably processed.

Carrying the sheets of glass in a substantially vertical position affords the apparatus a considerable processing flexibility and means that the apparatus has a limited footprint.

In fact, sheets of glass of any shape can be processed, even if they are not rectangular or if their opposite sides are not parallel.

The aforesaid known art has some important drawbacks, however.

In fact, it becomes necessary to complete several operations on the same processing line in order to process all of the edges and/or corners of a given sheet of glass, manually rotating and transferring the sheets before each step in the procedure.

These operations for the transfer and rotation of the sheet entail an increase in the processing times and costs and also demand a larger number of operators for controlling the procedure and working alongside the apparatus. This drawback could be overcome by an apparatus consisting of a plurality of grinding lines arranged in sequence along the path defined by the conveyor belt, but such an apparatus would have an excessively large footprint and would be less versatile to use.

To at least partially overcome said drawbacks, different apparatus for processing sheet glass have been developed, in which the sheets are placed in a horizontal position and carried along two or more parallel lines of grinding wheels or similar tools that simultaneously process two opposite sides of the same sheet.

This type of apparatus has important drawbacks, however, that give rise to a marked loss of flexibility in production.

In fact, the above-described apparatus is intended exclusively for processing substantially rectangular sheets of pre-established dimensions.

Said type of apparatus also has the drawback of a large footprint because the sheets are positioned horizontally.

In this situation, the technical aim underlying the present invention is to devise an apparatus for processing sheet glass capable of substantially overcoming the aforesaid drawbacks.

Within the context of said technical aim, a major object of the invention is to obtain a sheet processing apparatus that enables the rapid and automatic processing of several edges and/or corners of the same sheet.Another important object of the invention is to obtain a sheet processing apparatus that is versatile and enables the processing of different types of sheets of different thickness, shape and size.Another, not necessarily last object of the invention is to obtain a sheet processing apparatus that is compact and has a limited footprint.

The technical aim and objects specified are achieved by a sheet processing apparatus according to the appended claim 1.

Preferred embodiments are highlighted in the dependent claims.

Other characteristics and advantages of the invention are further elucidated in the following detailed description of a preferred embodiment of the invention, given with reference to the attached drawings, wherein:
**Fig. 1** shows an axonometric view of the apparatus according to the invention;
**Fig. 2** shows a view from above of the apparatus according to the invention;
**Fig. 3** shows a layout of the apparatus according to the invention;
**Fig. 4** shows a first detail of the apparatus according to the invention;
**Fig. 5** shows a second detail of the apparatus according to the invention;
**Fig. 6a** shows a first operating stage of the part of the apparatus according to the invention shown in Fig. 5;
**Fig. 6b** shows a second operating stage of the part of the apparatus according to the invention shown in Fig. 5;
**Fig. 6c** shows a third operating stage of the part of the apparatus according to the invention shown in Fig. 5;
**Fig. 6d** shows a fourth operating stage of the part of the apparatus according to the invention shown in Fig. 5; and
**Fig. 6e** shows a fifth operating stage f the part of the apparatus according to the invention shown in Fig. 5.

With reference to the above-mentioned Figures, the apparatus according to the invention is indicated as a whole by the number **1.**

The apparatus is designed to process a sheet **2** made of glass or other like material and particularly to process the edges and/or corners of said sheet 2.

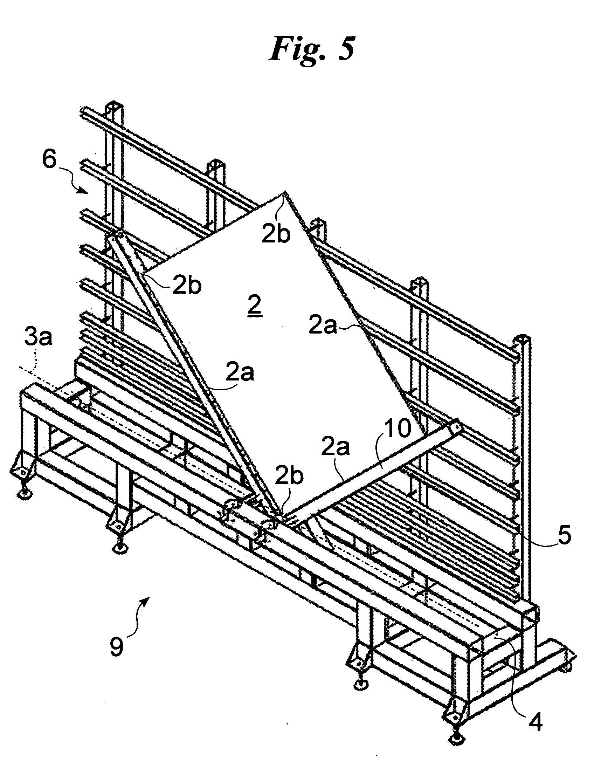

As shown in Fig. 5, the sheet 2 comprises edges **2a** and corners **2b,** and may be of any shape, though it is generally rectangular.

The apparatus 1 comprises means 3 for transferring the sheet 2 that define a working path **3a.**

The transport means 3 in turn comprise at least one conveyor line **4,** comprising a roller bed or belt type conveyor surface, preferably extending along a horizontal plane and suitable for supporting and transferring at least one sheet 2 along the working path 3a.

The transport means 3 also comprise a substantially flat supporting frame **5,** placed alongside the conveyor line 4 along the working path 3, in order to support the sheets 2.

The transport means 3 are designed to support the sheets 2 mainly by gravity and mainly along one edge 2a.

The sheets 2 thus rest substantially with one of their edges 2a on the conveyor line 4 and they are held in place by the supporting frame 5. In particular, they are arranged in a substantially vertical, or at least near-vertical position, preferably positioned so that the main plane in which they extend forms an angle coming between 5° and 10° with respect to the vertical.

Thanks to this solution, the sheets 2 are supported mainly, due to the effect of gravity, by the conveyor line 4 and partially also by the supporting frame 5, so that they remain stably balanced.

In order to support the sheets 2 in a suitable position, the frame 5 also extends preferably along surfaces with an angle of inclination coming between 5° and 10° with respect to the vertical.

The transport means 3 also preferably define a closed working path 3a.

In particular, said closed working path 3a consists of a first conveyor line **4a** and a second conveyor line **4b,** lying suitably on a straight line and parallel to one another, and by at least one transfer device **6,** suitable for transferring the sheets 2 in a crosswise direction with respect to the conveyer lines 4a and 4b.

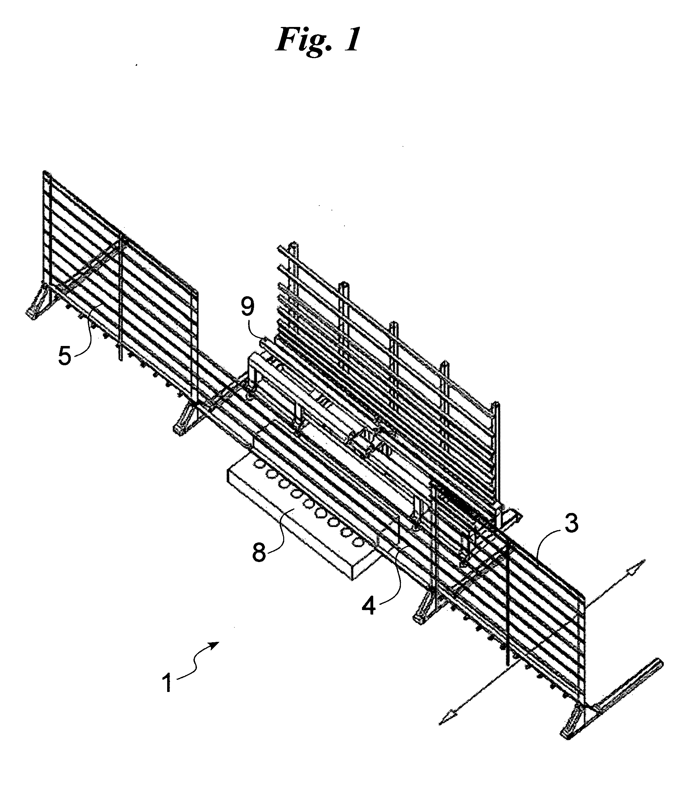

Said first and second conveyor lines 4a and 4b are flanked by suitable supporting frames 5 arranged parallel to one another and designed to support the sheets 2 in parallel positions, so the supporting frames 5 lie alongside the first and second conveyor lines 4a and 4b on the same side, as shown in Fig. 1.

The transfer device 6 is preferably designed to carry the sheets 2 in a direction perpendicular to the main direction in which the conveyor lines 4 extend.

A first transfer device **6a** and a second transfer device **6b** are suitably provided so as to link the first and the second conveyor lines 4a and 4b, thereby achieving the aforesaid closed working path 3a.

The transfer devices 6 may consist simply, as shown in Fig. 1, of a fixed portion of the conveyor line 4 and of the supporting frame 5, suitable for being displaced in a direction perpendicular to the working path 3a, by means of a suitable system of rails or the like.

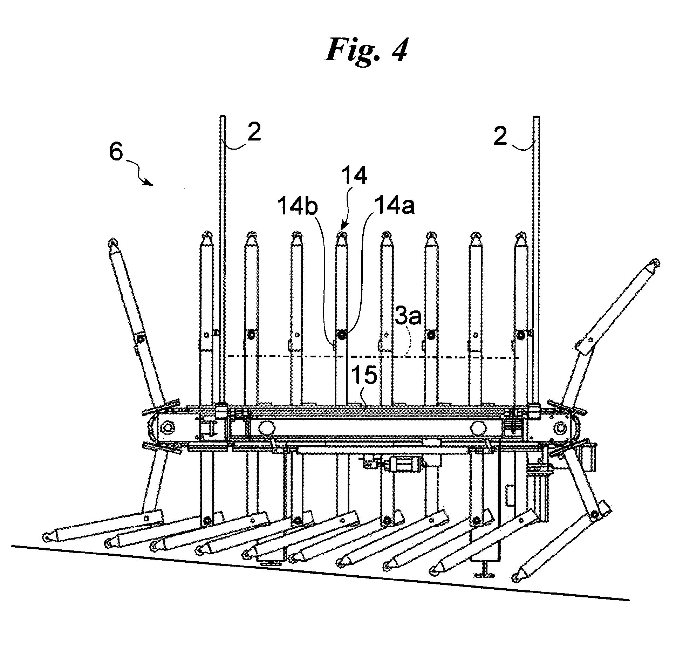

Alternatively, the transfer devices 6 may be made as shown in Fig. 4, which shows a transfer device consisting of a plurality of rows of rods **14.**

Said rows of rods 14 extend in a direction perpendicular to the working path 3a along the transfer device 6 and each row of rods 14 is suitable for supporting at least one sheet 2 in a near-vertical position, and preferably tilting with respect to the vertical at the same angle of inclination as the frame 5.

Said rods 14 can be displaced along the working path 3a, i.e. in a direction perpendicular to the direction is of said first and second conveyor lines 4a and 4b, so as to enable the sheets 2 to be transferred between said first and second conveyor lines 4a and 4b.

In particular, the rods 14 consist of bendable articulated members attached to a conveyor belt **15** suitable for their translation. In fact, said rods 14 comprise a revolving hinge **14a** that enables the rotation of two rigid portions of the rods in a direction perpendicular to the direction in which the transport device 6 travels and exclusively on the side opposite the side on which the sheets 2 are placed. For this purpose, there is a locking plate **14b** designed to prevent any rotation of the two rigid portions of the rods on the side against which the sheets 2 are rested.

Alternatively, the rods 14 may be telescopic and be extended to their maximum length only when they are being used to support and transfer the sheets 2.

Said solution enables space to be saved in terms of the height occupied by the apparatus 1, because the rods 14 can be bent or withdrawn when they are not being used to transfer the sheets 2, as shown in Fig. 4.

The transport means 3 also comprise at least one system **7** for the inserting/extracting the sheets 2 in/from the apparatus 1.

In particular, said insertion/extraction system 7 can consist of an extension of the first and/or second conveyor lines 4a and/or 4b, beyond the transfer devices 6.

A plurality of inlets and a plurality of outlets for the sheets 2 can thus be provided so that, for instance, different outlets can be used for sheets 2 that have already undergone several processing steps. In particular, three outlets **7a** and only one inlet **7b** are provided.

The insertion/extraction systems 7 can also comprise devices suitable for accumulating a number of sheets 2 and automatically feeding them to the apparatus 1 or automatically collecting them therefrom.

Alternatively, the insertion/extraction systems 7 can be provided in line with the transfer devices 4.

The apparatus 1 also comprises at least one processing device **8,** located along the working path 3a and designed to process at least one edge 2a of the sheet 2 when it is situated in a pre-established position.

Said processing device 8 is of the known type and consists, for instance, of a grinding line.

In particular, there may be a number ranging from 6 to 10 grinding wheels placed in series, with the lateral grinding wheels lying parallel to the sheet 2 and the central grinding wheels at an angle of 45° with respect to the plane on which the sheet lies.

The grinding wheels may also have different degrees of roughness, as appropriate, for processing the sheet 2.

The sheet 2 travelling along the grinding line is preferably supported (held in a substantially vertical position) by suitable plates of known type.

The processing device 8 takes action preferably along only one edge 2a of the sheets 2, and ideally along the edge 2a that is mainly being supported, i.e. along the edge 2a resting on the conveyor line 4.

The processing device 8 is thus loaded and unloaded by the transport means 3, according to the known art.

Finally, there may be several processing devices 8 along the working path 3a for completing different operations or for repeated operations.

The apparatus 1 also comprises at least one tipping device **9** located along the above-described working path and suitable for modifying the position of at least one sheet 2, and particularly suitable for changing the edge 2a on which the sheet 2 is mainly supported, i.e. the edge 2a resting on the conveyor line 4.

The tipping device 8 is consequently designed to modify the edge(s) 2a destined to be processed by the processing device 9.

The tipping device 9 is also loaded and unloaded by the transport means 3.

The tipping device 9 preferably consists of the glass sheet processing machine described in the Italian patent presented in the application No. MI2002A 000302 deposited on 15 February 2002 by the same applicant and approved on 15/03/2007 under No. IT 0001338673, particularly as regards the pages coming between pages 6 and 15 of the document deposited.

In particular, as shown in Fig. 5, said tipping device 9 comprises two articulated arms **10,** that can be rotated independently around two axes of rotation **10a** substantially aligned with the conveyor line 4 and preferably substantially coinciding with one another.

The articulated arms 10 can be rotated around the axes 10a by means of an electric motor with suitable gearing, or by means of two hydraulic cylinders **11,** and are designed to support at least one sheet 2 and to handle it, both in rotation around the axis of rotation 10a and in translation, preferably along the working path 3a.

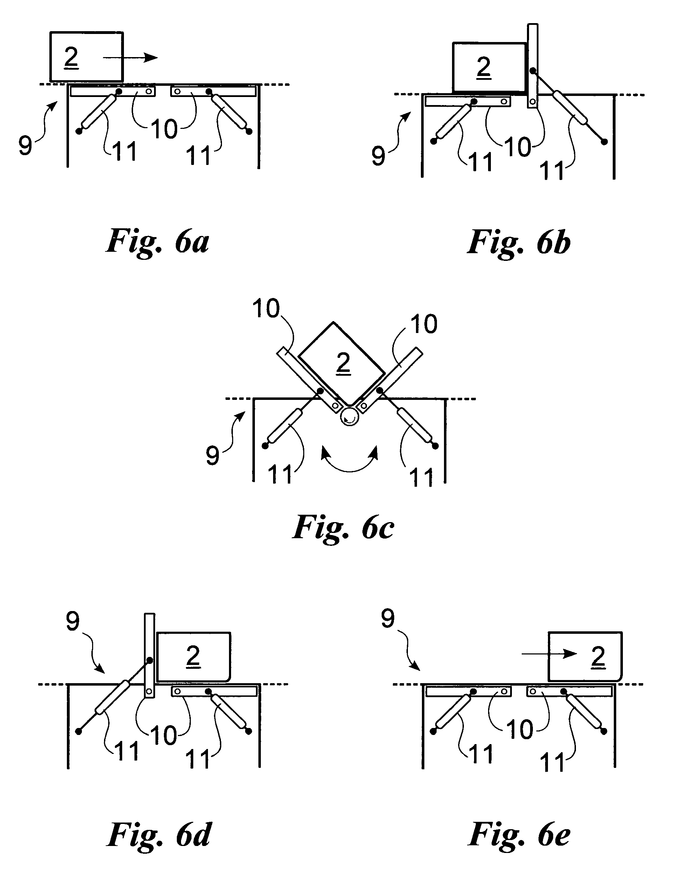

In particular, these articulated arms 10 are designed to lie on either side of a sheet 2 and to rotate simultaneously, carrying said sheet 2 between them and rotating it so that it comes into a position such that it is supported on a different edge 2a, as shown in Figs. 6b, 6c and 6d.

Moreover, to enable the transfer of the sheets 2 along the working path 3a, the articulated arms 10 comprise a plurality of rollers or belts, similar to the rollers or belts on the conveyor line 4.

Said rollers or belts enable the transfer of the sheets 2 along the working path 3a when they are placed parallel thereto, i.e. when they are in a horizontal position, as shown in Figs. 6a and 6e.

In particular, the rollers or belts are driven by a set of gears designed to enable the transfer of the sheets 2, when they are aligned with the working path.

The tipping device 9 also comprises a suitable processing assembly **12,** preferably consisting of a circular grinding wheel, or a plurality of such grinding wheels, capable of a translational movement and suitable for processing the corners 2b of the sheets 2, when they are in position on the arms 10 and tilted at an angle with respect to the horizontal, as shown in Fig. 6c.

Finally, the articulated arms 10 preferably enable the transfer of the sheets in both directions along the line defined by the working path 3a, so that the sheets 2 can be returned immediately from their forward position (shown in Fig. 6e) to their withdrawn position (shown in Fig. 6a), and they can be rotated several times, e.g. performing complete rotations of 180°.

The apparatus 1 also preferably comprises a device **13** of the known type for washing the sheet 2, and particularly the edge 2a after it has been processed.

Said washing device 13 is also preferably situated along the working path 3a and is loaded and unloaded by the transport means 3.

It preferably works by means of spraying brushes and water, and may be of variable type depending on the dimensions and type of the sheets 2.

The apparatus 1 can also comprise other types of devices suitable for processing the sheets 2 and for their heat treatment or mechanical treatment.

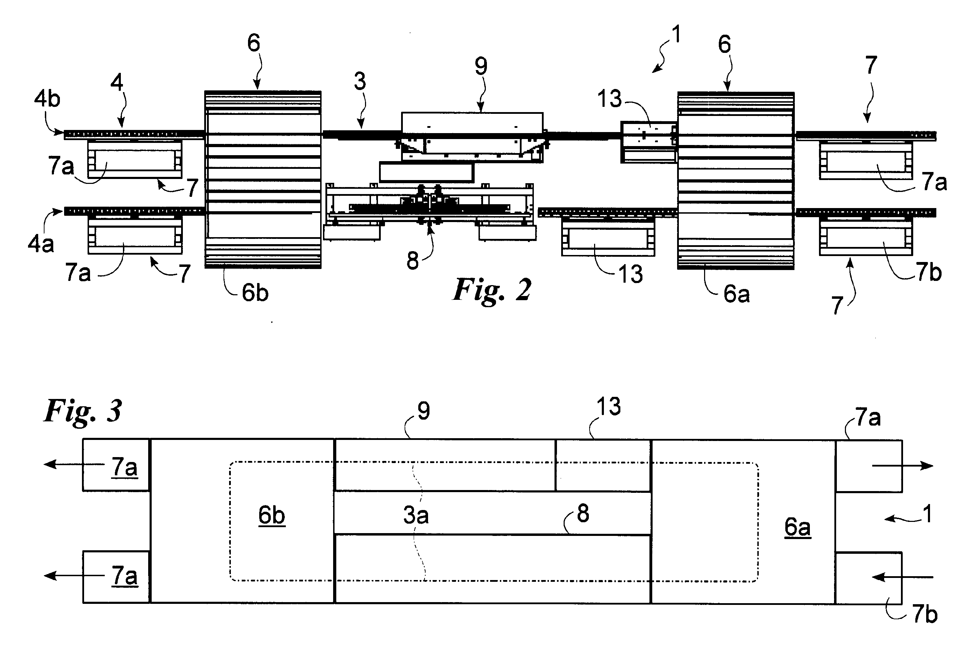

The arrangement of the above-described devices 6, 8, 9 and 13, and of the insertion/extraction systems 7 is schematically shown in Fig. 3.

In particular, the processing device 8 and the tipping device 9 are situated respectively on the first and second conveyor lines 4a and 4b, while the washing device 13 is located in a position adjacent to the tipping device 9, so that the sheets arrive at the washing device 13 immediately after being processed by the processing device 8.

Moreover, the inlet 7b is located in the vicinity of the processing device 8, while the four outlets 7a are situated at the other ends of the conveyor lines 4a and 4b.

The apparatus 1 also comprises a motorised means for driving the various devices, preferably of electrical type.

In particular, a plurality of electrical motors are installed below the plane of the conveyor lines 4, with a substantially cylindrical outer casing and arranged so that they extend mainly along the horizontal axis so as to occupy a limited amount of space and enable a relative reduction in the height of said conveyor lines 4.

Finally, the apparatus 1 comprises means for controlling the single elements constituting said apparatus 1. Said control means preferably comprise an electronic processor and are designed to control and govern the processing device 8, the tipping device 9, the transport means 3, the washing device 13 and the insertion/extraction system 7.

The operation of the sheet processing apparatus 1, described above in a structural sense, is as follows.

The sheets 2 are loaded by means of the insertion/extraction system 7 in the apparatus 1, particularly in line with the inlet 7b.

The sheets 2 are then transferred by the transport means 3 along the working path 3a.

The sheets 2 are subsequently brought into line with the processing device 8, where they are processed at least along the edge 2a, which occupies a previously-established position that preferably coincides with the edge 2a on which the sheet 2 is supported.

The sheets 2 are subsequently brought up to the tipping device 9, where the supporting edge 2a is changed, or said sheet 2 is placed in a previously-established position and carried back to the processing device 8, in order to start a new processing cycle on the edge 2a that now occupies the previously-established position as a result of the sheet's rotation.

The procedure can then be repeated several times, particularly once for each edge to process, until all of the edges 2a on the sheet 2 have been processed.

During the completion of said sequence of operations, the corners 2b of the sheets 2 are preferably also processed by means of the processing assembly 12 situated on the tipping device 9. Said procedure must also be completed once per cycle.

The sheets 2 can be moved from the processing device 8 to the tipping device 9 and back again by means of a reciprocating type of motion along an open working path 3a, or preferably by means of a continuous movement along a closed working path 3a, as described previously.

Moreover, as the sheet travels along the working path 3a, various other operations can be completed, such as the washing of the sheets 2 by means of the washing device 13, and so on.

More in detail, the previously-described apparatus 1 performs the following operations.

The sheets 2 pass along the first conveyor line 4a and then, in sequence, through the processing device 8, where the edges 2a on which the sheets 2 are resting is processed, then through the washing device 13, where said edges are washed.

The sheets 2 then reach the first transfer device 6a and are transferred by the latter to the second conveyor line 4b.

This second line 4b carries the sheet 2 through the tipping device 9, which changes the edge 2a on which it rests, and which also processes a first corner 2b of the sheet 2 before carrying it to the second transfer device 6b.

This latter device transfers the sheet 12 back to the first conveyor line 4a to enable another edge 2a to be processed, followed by the processing of another corner 2b.

The sequence of cycles and operations is governed by said control means, which are designed to enable the extraction of the sheets 2, by means of the insertion/extraction system 7, when all the processing steps on the sheet 2 have been completed.

In particular, it may simply be that one or more sheets 2 are arranged at the outlets 7a situated at the ends of the first or second conveyor lines 4a or 4b.

Or a plurality of different outlets can be used, depending on the type of processing action performed on the sheets and/or on the dimensions of said sheets.

The invention achieves important advantages.

In fact, the sheet processing apparatus 1 enables the rapid and automated processing of several edges 2a and corners 2b on the same sheet 2.

The apparatus 1 is also versatile.

In fact, it enables the processing of sheets 2 of different shapes and sizes and several different types of processing action, e.g. only on two opposite sides of the same sheet 2.

Another advantage lies in that the sheet processing apparatus 1 is compact and has a limited footprint. In fact, it preferably comprises only two or three devices for processing all the edges 2a, so the apparatus 1 has a relatively small footprint and can thus be used even in small areas under cover.

Finally, the apparatus 1 does not include elements for gripping the sheets 2, such as suckers or the like, the use of which delays the handling and positioning of the sheets.

## Claims

1. An apparatus (1) for processing sheets (2) comprising: transport means (3) for transferring at least one of said sheets (2), defining a working path (3a) and supporting said sheets (2) mainly due to the effect of gravity and mainly along one edge (2a), at least one processing device (8) being situated along said working path (3a) and designed to process at least one edge (2a) of at least one of said sheets (2), **characterised in that** it comprises at least one tipping device (9) located along said working path (3a) and suitable for modifying the edge (2b) being processed, and **in that** the transport means (3) are suitable for transferring at least one of said sheets (2) in a continuous sequence of movements from said processing device (8) to said tipping device (9) and vice versa.

2. An apparatus according to claim 1, wherein said working path (3a) is closed so as to enable the transfer in a continuous sequence of movements of at least one of said sheets (2) from said processing device (9) to said tipping device (8) and vice versa.

3. An apparatus according to one or more of the previous claims, wherein said transport means (3) comprise at least one conveyor line (4) designed to support and transfer at least one of said sheets (2) along said working path (3a) and a supporting frame (5) alongside said conveyor line (4) suitable for supporting said sheets (2).

4. An apparatus according to claim 3, comprising a first and a second conveyor lines (4a) and (4b) lying parallel to one another and at least one transfer device (6), suitable for transferring at least one of said sheets (2) in a direction crosswise to that of said conveyor lines (4a) and (4b).

5. An apparatus according to one or more of the claims 3 and 4, wherein said transport means (3) comprise at least one system (7) for the insertion/extraction of said sheets (2) in/from said apparatus (1), consisting of an extension of at least one of said conveyor lines (4).

6. An apparatus according to claim 4, wherein said processing device (8) and said tipping device (9) are located respectively on said firs and second conveyor lines (4a) and (4b).

7. An apparatus according to claim 4, wherein said transfer device (6) consists of a plurality of rows of rods (14), said rows extending in a direction perpendicular to said working path (3a) along said transfer device (6), said rods being movable in the direction of said working path (3a) and suitable for supporting at least one of said sheets (2).

8. An apparatus according to claim 7, wherein each of said rods (14) comprises a revolving hinge (14a) suitable for enabling the rotation of two rigid portions of the rod in a direction perpendicular to the direction in which said transport device (6) travels and exclusively on the side opposite the side on which the sheets (2) are rested.

9. An apparatus according to claim 7, wherein each of said rods (14) is telescopic.

10. An apparatus according to one or more of the previous claims, wherein said tipping device (9) comprises two articulated arms (10), capable of revolving independently around two axes of rotation and suitable for supporting at least one of said sheets (2) and handling it, both turning it around a horizontal axis of rotation (10a) and transferring it substantially along said working path (3a).

11. An apparatus according to one or more of the previous claims, wherein said tipping device (9) comprises a processing assembly (12) suitable for processing at least one corner (2b) of at least one of said sheets (2), when they are arranged on said articulated arms (10).

12. An apparatus according to one or more of the previous claims, comprising a device (13) for washing at least one of said sheets (2), taking effect along said edge (2a) on which said sheet (2) is mainly supported.
